(19) Europäisches Patentamt
European Patent Office
Office européen des brevets

(11) **EP 3 005 386 B1**

(12) **EUROPEAN PATENT SPECIFICATION**

(45) Date of publication and mention
of the grant of the patent:
**28.08.2019 Bulletin 2019/35**

(21) Application number: **14728894.8**

(22) Date of filing: **28.05.2014**

(51) Int Cl.:
*H01G 5/01* (2006.01)     *H01G 5/014* (2006.01)
*H01G 5/14* (2006.01)     *H01G 5/013* (2006.01)
*H01G 5/04* (2006.01)     *H01G 5/16* (2006.01)
*H01G 5/38* (2006.01)     *H01G 5/00* (2006.01)

(86) International application number:
**PCT/EP2014/061160**

(87) International publication number:
**WO 2014/191510 (04.12.2014 Gazette 2014/49)**

(54) **VACUUM VARIABLE CAPACITOR**

VARIABLER VAKUUMKONDENSATOR

CONDENSATEUR VARIABLE À VIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2013 PCT/EP2013/061174**

(43) Date of publication of application:
**13.04.2016 Bulletin 2016/15**

(73) Proprietor: **Comet AG
3175 Flamatt (CH)**

(72) Inventors:
• **MILDNER, Mark Joachim
3206 Rizenbach (CH)**
• **BIERI, Roland
2545 Selzach (CH)**

• **ABRECHT, Mike
3174 Thörishaus (CH)**
• **BIGLER, Walter
1714 Heitenried (CH)**
• **BEUERMAN, Douglas
Boulder Creek, CA 95006 (US)**
• **GILMORE, Jack
Fort Collins, CO 80524 (US)**

(74) Representative: **BOVARD AG
Patent- und Markenanwälte
Optingenstrasse 16
3013 Bern (CH)**

(56) References cited:
**GB-A- 1 208 393       GB-A- 1 574 197
JP-A- H1 167 590      JP-A- 2010 135 439
US-A1- 2002 048 136   US-A1- 2013 038 978**

## Description

Technical field

The present invention relates to the field of vacuum variable capacitors.

Background of the invention

Vacuum variable capacitors are useful for example in impedance matching networks in which the impedance of a time-dependent high-frequency load can be matched with that of a generator by adjusting one or more vacuum variable capacitors. The capacitance of such capacitors can be controllably adjusted by moving one electrode, or set of electrodes, with respect to the other, and the use of vacuum as the dielectric medium allows their use in high power applications, for example operating at voltages in the kV range or several tens of kV voltages, carrying currents up to several hundred amppere, and at frequencies as low as 200 kHz or as high as 200MHz. Such capacitors can be used as the tuning element in high-power impedance matching networks and are often used for high power radio-frequency (RF) applications requiring fast, controllable, reliable capacitance adjustment over a large range (typically about 1:50 or more) with high resolution (typically more than 10000 setpoints in the range) and operating lifetimes of many years. A vacuum variable capacitor is known from GB 1 208 393 A.

Vacuum capacitors typically comprise a pumped and sealed enclosure, said enclosure typically comprising two metallic collars electrically insulated form each other by a cylindrical (tubular) ceramic (or other electrically insulating) piece joined in a vacuum tight manner to the aforementioned collars. Inside the enclosure and conductively attached to each metallic collar are electrodes whose function (together with the vacuum dielectric) is to generate electric capacitance. The cylindrical ceramic also contributes to the total capacitance but is rarely a significant contribution. Typically one electrode is mechanically fixed to one collar and the other electrode can be either stationary also, or it can be moved from outside the vacuum enclosure by means of a drive system. The movable electrode is therefore not rigidly attached to the collar but is attached at one end of an expandable joint (such as metallic bellows). The other end of the expandable joints is attached to the collar.

In most cases the expandable joint is also a hermetic seal separating the room inside the enclosure (which is at a vacuum) from the non vacuum side (at atmosphere). The drive system typically comprises a screw and nut system moving a shaft along a guiding tube, said moving shaft permits to compress or expand the expandable joint. Therefore axial movement of the screw/nut guiding system outside the vacuum is transferred to axial movement of the movable electrode inside the vacuum typically by means of the expandible joint, hereafter generally referred to as a bellows, although other expandable joints may be used. The vacuum dielectric medium gives the name to such capacitors. The vacuum pressure is typically better (lower) than $10^{-4}$ mbar. Using vacuum as a capacitor dielectric has the advantages of stable dielectric value (in particular no temperature, nor frequency dependencies), and allows stable operations of the capacitor at high voltages and high currents with very low dielectrical losses. For example, Publication US2010202094 (A1) describes a vacuum variable capacitor. Some specific applications of vacuum capacitors include broadcasting (eg in an oscillation circuit of a high power transmitter) or plasma controlling processes in the semiconductor, solar and flat panel manufacture, for example during industrial Plasma-Enhanced Chemical Vapor Deposition (PECVD) processes. In such applications, adjusting the capacitance of the vacuum variable capacitors allows to change (and match) the impedance between RF loads (such as those generated by the PECVD processes) and the fixed impedance of a high power RF generator, fixed by industry standard to $Z_{Generator}^{out} = (50 + 0j)\ Ohm$. Failing to match the impedance would result in electric power not being delivered to the process, but instead being reflected back into the generator which could lead to its destruction.

Vacuum capacitors are therefore the key tunable element for RF power transfer to varying loads. Despite being relatively bulky, vacuum variable capacitors offer several advantages compared to other tuning mechanisms such as inductive tuning, or other forms of capacitive tuning (non-mechanical technology or non vacuum-technology). Indeed, vacuum variable capacitors allow nearly continuous tuning and have an excellent resolution (capacitance range can easily be divided into more than 10000 setpoints when the micro-step features of a typical stepper motor is used) over a very large capacitance range and have very high voltage capabilities thanks to the vacuum dielectric. Moreover, because of the extremely low dielectric losses, vacuum capacitors allow large currents without generating much heat and consequently are essentially unrivalled for the most demanding power applications. The adjustment of the capacitance value is achieved by mechanically moving one electrode with respect to the other electrode, thereby either modifying the distance between the two electrode surfaces or modifying the electrode surface overlap (the latter is most common), both of which result in a change of the capacitance value.

Typical vacuum variable capacitors for MHz applications are designed to provide capacitance values in the pF range (sometimes extending into the low nF range), whereas a single unit will cover a capacitance range of approximately 1:50 or more; that is, if the minimum setting $C_{min}$ is for example 10 pF, then a maximum of $C_{max}$ = 500 pF can typically be set using the same unit. The time taken to move the movable electrode between

$C_{min}$ and $C_{max}$ is typically 1s or more in prior art capacitors. A smaller adjustment requires a roughly proportionally smaller amount of time. Recently, the adjustment times during, and in between consecutive plasma processes used in chip manufacturing or other semiconductor manufacturing processes have shrunk considerably, so that vacuum variable capacitors have sometimes become the bottleneck element in impedance matching and in the overall processes using radio frequency power. While there is progress towards more rapid control software, there are physical limitations on the speed with which a mechanical part (the moving electrode) can be moved using a given motor. One limiting factor on the speed is the motor power required to counter the significant force due to the pressure differential (1 bar) between the inside and the outside of the vacuum tight enclosure.

State of the art vacuum variable capacitors are thus limited in speed primarily by the power of the motor and by the pressure-velocity limit (so-called PV value) of the screw and nut of the drive system used to move the movable electrode of the capacitor. A high PV value of the application leads to a high contact pressure between the nut and the screw threads of the drive system, negatively affecting the wear of said screw/nut system and resulting in earlier failures (or alternatively requiring regular exchange of screw/nut system).

Prior art capacitors also suffer from significant membrane stresses and bending stresses in the bellows. The greater these stresses, the smaller the number of compression/expansion cycles (lifecycles) which the bellows can endure before they fail.

Irrespective of the type of motor being used for the drive system, a high torque is inevitably required to work against the pressure differential of a prior art vacuum variable capacitor, as explained hereafter.

Stepper motors are typically used to drive vacuum variable capacitors because of their positioning accuracy (resolution), high stiffness (stepper motors develop their maximum holding torque at standstill and typically do not require any brake), and because they have satisfactory speeds for most applications. Typically stepper motors can run at 600 RPM or 1200 RPM to drive most common vacuum variable capacitors and still provide enough torque to work against the vacuum force. Unfortunately, however, one property of stepper motors is that increasing the speed decreases the available torque, which, at very high speeds, results in step loss and inaccuracy. Other motors (such as servo-motors, or linear motors) also have decreasing torque at high speeds. Obtaining a combination of higher torque and speed is only possible by drastically increasing the size and cost of the motor. This is not an acceptable option for components integrated into OEM (original equipment manufacturer) impedance matching networks.

The present invention aims to overcome the above and other disadvantages with prior art vacuum variable capacitors. In particular, it is an object of the invention to provide an improved vacuum variable capacitor in which the adjustment speed is increased, but preferably without increasing the size of the motor, without increasing the size of the device, and/or without reducing the adjustment resolution of the device.

Additional advantages may include an increase in the lifetime of the device (in particular an increase of the number of capacitance adjustment cycles), without compromising on the maximum operating voltage/power, compactness of the device, or its adjustment resolution.

Brief description of the invention

The above object is achieved by a vacuum variable capacitor, as defined by the features of claim 1, adjustable between a minimum capacitance value and a maximum capacitance value, and comprising:
a first vacuum enclosure (also referred to as primary vacuum enclosure) containing capacitor electrodes separated by a vacuum dielectric, the wall of the first vacuum enclosure comprising a first deformable region (also referred to as bellows) for transferring mechanical movement between a drive means and a mobile one of the capacitor electrodes inside the first vacuum enclosure; and a second enclosure, referred to as the pre-vacuum enclosure, containing a gas at a predetermined pressure, lower than atmospheric pressure, the pre-vacuum enclosure being arranged such that the first deformable region separates the pre-vacuum enclosure from the first vacuum enclosure.

The second enclosure (also referred to as a pre-vacuum or secondary enclosure) contains a gas, preferably at a pressure below atmospheric pressure, and thereby serves to reduce the pressure differential across the bellows. This reduction in pressure differential in turn reduces the amount of motor torque which is required to move the bellows and/or increases the adjustment speed which can be achieved using a given motor.

The drive means is disposed outside the enclosures of the vaccum variable capacitor. Therefore optimal convection for the cooling of the drive means, in particular a motor running the drive means, is provided. The drive means transfers its movement to a driven means inside the vaccum variable capacitor, in particular inside the second enclosure. Depending on the selected drive system, drive means and driven means can be differing embodiments.

The drive means comprises a contact free transfer of its movement to a driven means inside an enclosure of the vacuum variable capacitor. Preferably the drive means is coupled to a driven means by a magnetic coupling. For example the drive means may comprise a first rotating magnetic plate and the driven means may comprise a second magnetic plate that is rotated by magnetic force of the first magnetic plate. The first magnetic plate may e. g. be rotated by a motor. The second magnetic plate can be connected to a screw/nut system. Also the drive means may be an induction motor and the driven means may be a voice-coil or the like. Advantageously the magnetic coupling comprises a shielding to be shielded from any electromagnetic fields during the operation of the vacuum capacitor.

In an other embodiment the drive means may be realized as a screw / nut system, wherein the drive means is realized by a motor comprising a shaft with a screw section, wherein the shaft extends from outside the enclosures into an enclosure of the vacuum variable capacitor. The driven means is realized at least by the nut inside the enclosure.

The presence of the pre-vacuum enclosure means that the motor needs less torque in order to drive the nut and compress or expand the bellows and move the movable electrode(s) inside the first vacuum enclosure. This allows faster speeds using a motor of the same size and power. Note that the reduction in torque required is not due merely to the reduction in the vacuum force on the bellow. The vacuum force gives rise to a significant contact force (friction) between the nut and the screw. A reduction in the pressure differential, and hence in the vacuum force, results in a significant decrease in the amount of rotational friction between the nut and the screw thread. This reduced rotational friction also results in a significant decrease in the amount of torque required by the motor to drive the shaft.

The pre-vacuum enclosure does not need to be pumped down as much as the primary vacuum. Indeed the primary vacuum pressure must be many orders of magnitude less than the atmospheric pressure in order to perform adequately as a dielectric, whereas the pressure in the pre-vacuum enclosure may merely be one order of magnitude less than the atmospheric pressure, for example, which is already sufficient to reduce the axial force acting on the drive system (the screw/nut etc) by about a factor of 10. With the reduced force acting on the drive system, the required torque of the motor is reduced considerably which allows for higher speeds.

Moreover, the arrangement can increase the lifetime of the bellows, which separates two volumes under a reduced pressure differential and will therefore be subject to less membrane stress and less bending stress upon compression/expansion. The reduced vacuum force also leads to a reduction in the wear of the screw-and-nut drive system, thus leading to longer lifetimes of those components.

In one embodiment, an improved variable vacuum capacitor is achieved by having a motor running the drive means, for example a stepper motor, outside either of the two vacuum enclosures (i.e. the motor is at atmospheric pressure). This allows optimal convection cooling of said motor.

By further using a magnetic coupling between the parts of the drive system on the atmospheric side and the parts of the drive system in the pre-vacuum enclosure, one achieves a contact free transfer of movement between the motor and the drive system parts in the pre-vacuum enclosure: the transmission of the rotational movement from the drive means to the driven means is purely done with a magnetic coupling. With this arrangement, even though there is a pressure differential of nearly 1 atm between the pre-vacuum enclosure and the motor area, none of the moving parts are subjected to an force resulting from that pressure differential.

Due to vacuum capacitors typically being operated in or near high electromagnetic fields, the magnets of the magnetic coupling need to be shielded from such fields for proper operations.

Because the pressure differential between the pre-vacuum enclosure and the primary vacuum enclosure is not significant (it can be chosen for example to be of the order of • 0.1 atm), there is much less stress on the bellows separating the two vacuum enclosures compared to today's bellows in vacuum capacitors. Therefore, the mechanical properties of the bellows become less stringent compared to those used in today's vacuum capacitors, for which 1 atm of pressure differential always exists across the bellows (due to the non-existence of a pre-vacuum enclosure in today's vacuum capacitors). This invention therefore permits, either longer bellows lifetime with existing bellows, or alternatively permits more choices of materials for bellows. It is furthermore possible to use other shapes of expandable joints instead of conventional bellows.

For the same reason of reduced pressure differential and resulting reduced force, the required "Pressure*Velocity (PV)" value of the screw/nut pair or pair of magnetic plates of the drive system in the pre-vacuum enclosure becomes lower (lower P) which allows for higher velocities and/or longer lifetimes of the screw/nut system.

Most importantly, because the vacuum force is essentially eliminated, the required torque of the motor, in particular of a stepper motor to achieve movement is reduced. Thanks to the reduced required torque, the motor, in particular a stepper motor, can run at higher speeds without step loss and therefore perfect accuracy is maintained in controlling the mobile electrode's position and associated capacitance value of the vacuum variable capacitor up to much higher speeds than today's state of the art vacuum variable capacitors.

In one embodiment of a vacuum variable capacitor according to the invention, the electrodes, the drive means and the pre-determined pressure in the pre-vacuum enclosure are configured so that the minimum adjustment time between the minimum capacitance value and the maximum capacitance value is less than 0.1s. The maximum capacitance value can be at least 10 times greater than the minimum capacitance value.

In one embodiment of a vacuum variable capacitor according to the invention, the bellows are configured to sustain 10 million cycles, where one cycle comprises a first capacitance adjustment from a first capacitance value to a second capacitance value, where the second capacitance value is ten times the first capacitance value, and a second capacitance adjustment from the second capacitance value to the first capacitance value. The electrodes and the motor for the drive means are configured so that the minimum adjustment time for one of said cycles is less than 0.05s.

In one embodiment of a vacuum variable capacitor according to the invention, control means for controlling the motor (15) and the drive means respectively is provided, wherein the control means, the motor and the drive means are configured such that the capacitance is adjustable in increments smaller than 1/5000th of the difference between the maximum and the minimum capacitance values.

The fast vacuum variable capacitor described here may for example be configured with the motor located outside the pre-vacuum enclosure, and with the gas in the pre-vacuum enclosure at a pressure of approximately 0.1 bar, for example. A pressure of 0.1 bar diminishes the vacuum force on the bellows by approximately 90% but still provides enough molecules to allow convection cooling so that the motor does not overheat. A better vacuum (a lower pressure) may not allow enough heat to be evacuated towards the outside environment leading to overheating of the motor and failure of the system. Generally, a pressure of between 0.05 bar and 0.5 bar has been found to offer a useful reduction in vacuum force, without the need for extra cooling measures. However, any pressure up to atmospheric pressure may be used, and still offer an improvement.

In principle, the vacuum force could be reduced to zero by fully evacuating the pre-vacuum chamber. This would reduce the required motor torque for driving the screw/nut or the magnetic coupling to a very small value. However, the vacuum force provides a useful axial biassing force on the screw-nut drive. This axial biassing force significantly reduces the amount of play in the screw/nut drive, and thereby contributes to the accuracy (resolution) of the capacitor adjustment. The bellows may have an inherent spring-like force, which also has the effect of biasing the screw-nut mechanical interface. However, the bellows may be under compression at one point in its extension range, and in tension in another part of its extension range, so it will exert a positive and a negative biasing force on the drive screw/nut, depending on where in its extension range the bellows happens to be. Thus, it is advantageous to configure the pressure differential across the bellows such that the vacuum force is greater than the maximum bellows spring force acting in a direction opposite to the vacuum force. In other words, the resultant "vacuum force + bellows spring force" should not change orientation even when the bellows go through their neutral position (from being compressed to being extended). Indeed although the bellows force alone would change orientation depending whether it is operated in compression mode or in extension mode, the adding of the (diminished) vacuum force still ensures that the sum of the forces does not change orientation. This can be guaranteed by having the secondary vacuum pressure high enough to at least equalize the maximum amplitude of the bellows spring force of the capacitor. A change of orientation of the resultant force would allow backlash in the screw-nut system or the magnetic coupling resulting in an inferior position control of the capacitor (and associated capacitance and impedance values). In other words, the diminished vacuum force should be determined so that it is still just big enough to compensate any bellows force in an opposite direction (this will depend on the mechanical properties of the bellows used).

For similar reasons, another advantage of a reduced but not fully compensated vacuum force, is that the capacitor can be positioned and integrated in any orientation into an impedance matching network provided that the reduced vacuum force still at least also compensates the gravitational force which applies on the movable electrode when the bellows axis is not horizontal. A pressure of 0.1 bar was found to be appropriate with typical choices of bellows and electrode mass. However, in other situations a higher or lower pressure may be more effective.

Detailed description of the invention

The invention will now be described in detail, with reference to the accompanying drawings, in which:

- Figure 1 shows, in schematic cross-sectional view, a prior art vacuum variable capacitor.

- Figure 2 shows, in schematic cross-sectional view, an example of a vacuum variable capacitor according to a first embodiment of the invention comprising a drive means outside the enclosures of the vacuum variable capacitor.

- Figure 3 shows, in schematic cross-sectional view, an example of a vacuum variable capacitor according to a second embodiment of the invention.

- Figure 4 shows, in schematic cross-sectional view, an example of a vacuum variable capacitor according to a third embodiment of the present invention.

- Figure 5 shows, in schematic cross-sectional view, a further example of a vacuum variable capacitor according to a fourth embodiment of the present invention.

The figures are provided for illustrative purposes only, and should not be construed as limiting the scope of the claimed patent protection.

Where the same references have been used in different drawings, they are intended to refer to similar or corresponding features. However, the use of different references does not necessarily indicate a difference between the features to which they refer.

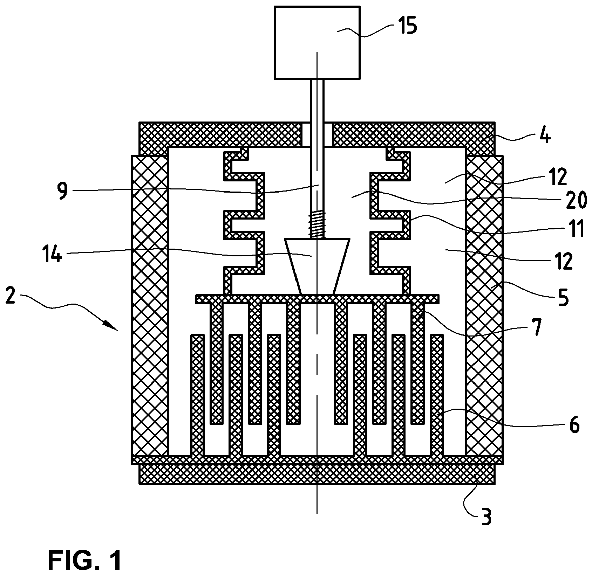

Fig. 1 shows a highly simplified, diagrammatical cross-section of an example of a prior art vacuum variable capacitor. It comprises a pumped and sealed vacuum enclosure (2) formed with two metallic collars (3, 4) electrically insulated from each other by a cylindrical ceramic piece (5) joined in a vacuum tight manner to the collars (3, 4). Inside the enclosure (2) and conductively attached to each metallic collar (3, 4) are a static electrode (6) and a movable electrode (7) whose function, together with a vacuum dielectric (12), is to generate electric capacitance. The static electrode (6) is mechanically fixed to one collar (3) and the movable electrode (7) can be moved by means of a drive system comprising a lead screw (9) and nut (14). An expansion joint or bellows (11) separates the vacuum dielectric (12) from the atmospheric pressure outside the vacuum enclosure (2). Note that there is a force due to the pressure differential (• P • 1 bar) that acts on the bellows (11) and the contact surface between the nut (14) and the lead screw (9). To change the capacitance value of the vacuum variable capacitor, the overlap of the electrodes (6) and (7) may be adjusted by turning the screw (9) an appropriate number of turns or fraction of turns. This is done by typically using a motor (15). The vacuum force, which can be as much as 300N or more, acts on the bellows (11) to pull the bellows and the nut towards the vacuum (ie downwards in figure 1). The magnitude of the vacuum force depends on the geometry of the bellows (11), which form the interface between the vacuum (12) and the surrounding atmosphere. This leads to a high torque requirement for the motor (15), which in turn limits its speed, as discussed above.

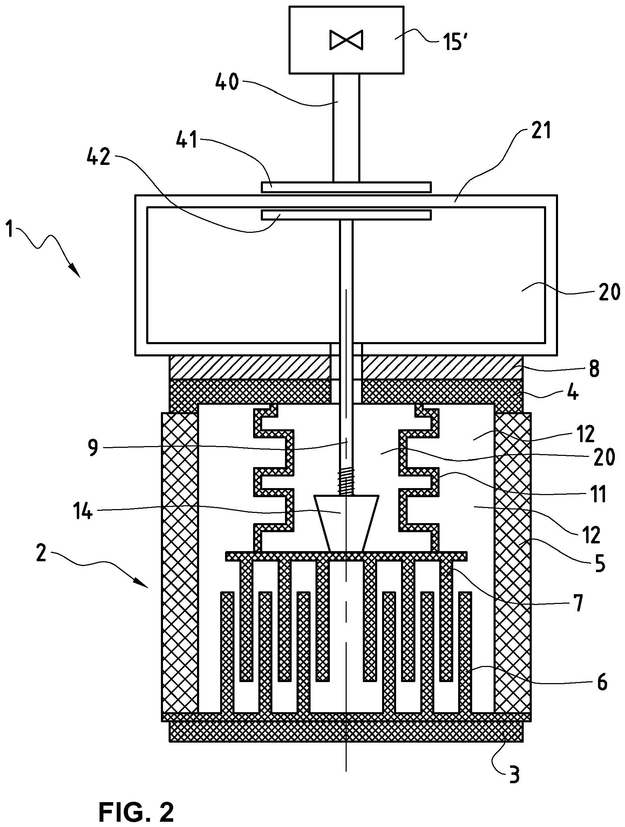

Fig. 2 shows, in similarly simplified form, an example of a vacuum variable capacitor (1) according to a first embodiment of the present invention. It comprises a first vacuum-tight enclosure (2), electrodes (6, 7), motor (15'), lead-screw (9), nut (14) and bellows (11). The motor (15') is for example a stepper motor. In addition, a low-pressure enclosure (21), also referred to as a partial vacuum, pre-vacuum or second enclosure, is sealed to the first vacuum enclosure (2). The pre-vacuum enclosure (21) may contain a gas (20) at a pressure lower than atmospheric pressure, for example 0.1 bar.

Instead of separating the vacuum dielectric (12) from the atmosphere, as in figure 1, the bellows (11) of figure 2 now separate the vacuum dielectric (12) from the low-pressure gas (20) contained within the sealed pre-vacuum enclosure (21).

If the pressure in the pre-vacuum enclosure is 0.1 bar, then the vacuum force acting on the bellows (11) and the nut (14) will be approximately one tenth of the corresponding vacuum force in the vacuum variable capacitor illustrated in figure 1.

Because the vacuum force is reduced, the torque required by the motor (15') is also smaller than for the vacuum variable capacitor of Fig. 1.

It can be noticed that in this embodiment according to the present invention the motor (15') is connected to a drive means (40), that is used to drive the lead screw (9). Thus, in this embodiment the lead screw (9) serves as a driven means to adjust the overlap of the electrodes (6) and (7). In this example, the drive means (40) includes an axle of the stepper motor. The motor (15') and the drive means (40) are located outside the pre-vacuum enclosure (21). The drive means (40) and the driven means are connected to a magnetic coupling. The axle of the motor (15') is fixed to a first magnetic plate (41), that is moveably arranged along a wall of the second enclosure (21) and outside the second enclosure (21). Because the first magnetic plate is rigid with the axle, it can be regarded as being part of the drive means. The first magnetic plate (41) is located opposite to the lead screw (9) arranged within the second enclosure (21). The lead screw (9) is fixed to a second magnetic plate (42), that is moveably arranged along the wall of the second enclosure (21) on the inside of the second enclosure (21). The second magnetic plate (42) is rigid with the lead screw (9) and is part of the driven means. The movement of the drive means (40) is transferred to the driven means by the magnetic force between the magnetic plates (41) and (42). This set-up permits a contact free transfer of movement between the motor (15') and the movable electrode (7), with the additional advantage that the previously defined "vacuum force" acting on the bellows (11) and the contact surfaces of the threads of screw (9) and nut (14) can be reduced or even totally eliminated by a judicious lowering of the gas pressure inside the seconde enclosure (21)

Although Figure 2 shows an insulation (8) between the container of the pre-vacuum enclosure (21) and the metallic collar 4 of the first vacuum enclosure (2), it would not be necessary in this set-up, provided the motor is still electrically insulated from the high voltage of the capacitor. In this set-up, the air gap resulting from the contact free design may offer sufficient insulation, or the motor (15') can be purposely insulated with an additional part which would preferably be positioned directly between the motor (15') and the axle of the drive means (40). The insulation is mentioned later in the description.

The collar (4) on the variable side of the vacuum variable capacitor (1) is often refered to as the "variable mounting plate". It is used to mount the vacuum variable capacitor into an impedance matching network or other system. A different electrode arrangement inside the first vacuum tight enclosure (2) allows to simplify the mounting of the drive system, as will be explained in relation to the second embodiment of the invention.

Coming back to the present embodiment (Fig. 2), let us assume that the pressure in the pre-vacuum enclosure (21) is 0.1 bar for the following discussion about the increase of the lifetime of the vacuum variable capacitor.

Firstly, the bellows (11) lifetime improves because the pressure differential (• P) across the bellows (11) is now reduced by 90%, and this reduction will produce lower membrane stress and lower bending stress of the bellows (11) in extension or compression, thus leading to an extended lifetime. Secondly, the lifetime of the screw (9) and nut (14) is also improved, because the PV value is reduced thanks to the lower pressure value.

PV is the product of pressure and velocity, where the pressure and velocity here are those at the contact surfaces of the mating threads of the screw (9) and nut (14). The PV value is a common engineering value that may be used to predict mechanical wear and the time to failure of two sliding surfaces in contact such as those of screws and nuts. A decreased pressure difference across the bellows (11) results in a lower contact pressure between the mating thread surfaces of the screw (9) and the nut (14). With the vacuum variable capacitor (1) illustrated in figure 2, the reduction in contact pressure between screw (9) and nut (14) gives rise to one or more of the following beneficial properties:

> For a given screw/nut pairing, less wear and longer lifetimes;
>
> For a given screw/nut system and the same lifetime requirements, it allows the screw/nut drive system to operate at faster speeds without reducing lifetime;
>
> Choosing a less expensive combination of screw/nut materials and still reaching the same lifetimes at the same speeds;
>
> Choosing smaller screws and nuts (and therefore contributing to the miniaturization of the vacuum capacitor) without reducing lifetime.

As mentioned before the motor (15') may be a stepper motor, for example. Alternatively, one may use other types of DC motors or AC servo motors.

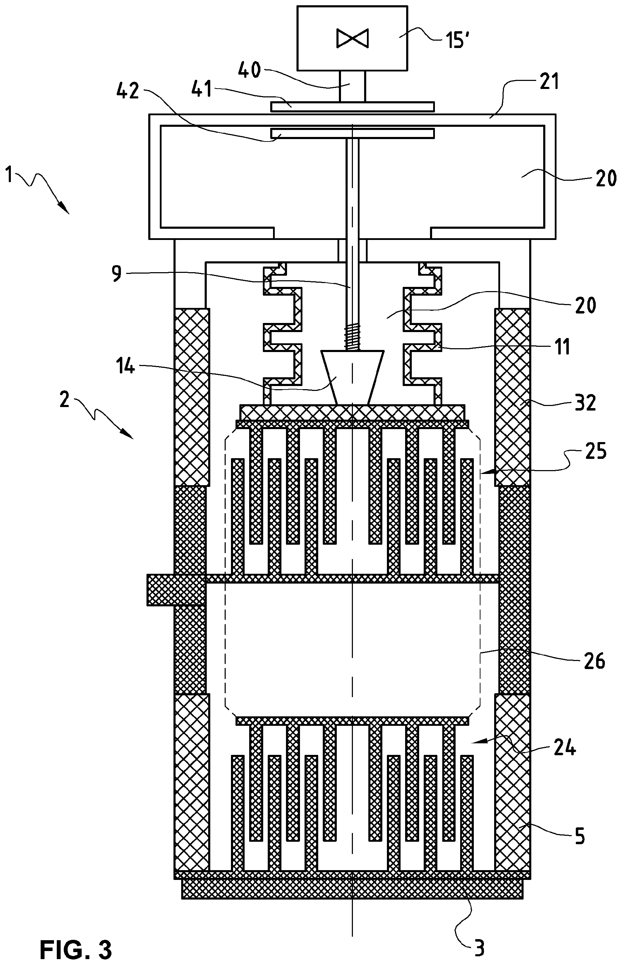

Fig. 3 shows an example of a vacuum variable capacitor according to a second embodiment of the present invention. In this example, the arrangement of two ganged sets of electrodes (24, 25) inside the first vacuum enclosure (2) and the use of a second ceramic insulator (32) as part of the vacuum enclosure (2) makes it possible to connect the motor (15'), located outside the pre-vacuum enclosure (21). Optionally the pre-vacuum enclosure may provide an insulating piece to electrically insulate the motor from the high voltages applied during operations of the vacuum variable capacitor (1). Again the motor (15') with its drive means (40) is arranged outside the pre-vacuum enclosure (21) and coupled to the driven means by a magnetic coupling comprising first and second magnetic plates (41) and (42) as already described for the second embodiment shown in Figure 2.

As can be seen in figures 2 and 3 the motor (15') and the drive means (40) are located outside the pre-vacuum enclosure (21), while the driven means in form of the lead screw (9) is located inside the pre-vacuum enclosure (21). The pre-vacuum enclosure (21) serves as a pressure vessel, for reducing the pressure differential across the bellows (11). The design of such a pre-vacuum enclosure offers quite some flexibility: for example, it is conceivable that by using a valve and a pumping system (not shown in Figure 3) the pressure inside the pre-vacuum enclosure could be dynamically adjusted to not only counteract statically the vacuum force, but also to counteract dynamically the varying spring-like force of the bellows being compressed or extended.

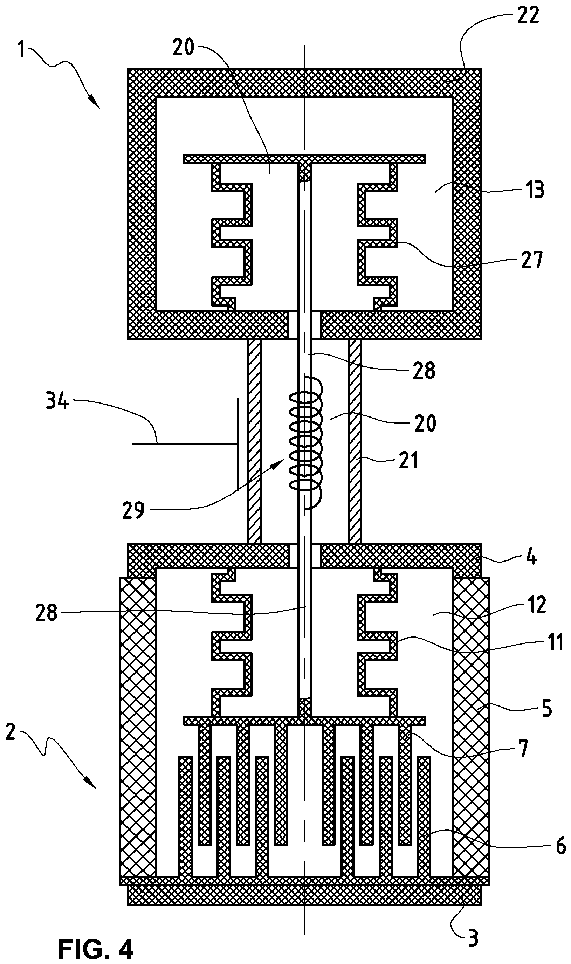

Fig. 4 shows an example of a vacuum variable capacitor (1) according to a third embodiment of the present invention, which comprises, as in the first and second embodiments, a first vacuum enclosure (2) containing electrodes (6, 7) in a vacuum (12), and bellows (11), which separate the vacuum (12) from a pre-vacuum enclosure (21) containing a gas (20) at low pressure, as described in relation to the first and second embodiments.

The vacuum variable capacitor of figure 4 also comprises a third vacuum enclosure (22) and second deformable wall region, or bellows (27),, which are constructed such that the net vacuum force of the second bellows (27) due to the pressure differential between a third vacuum (13) and the pre-vacuum gas (20), and the bellows spring force of the second bellows (27), are substantially the same as, but acting in the opposite direction to, the corresponding net vacuum force and bellows spring force on the first bellows (11).

As shown in figure 4, the first and second bellows are connected by a mechanical linking means (in this case a common shaft, 28), which ensures that the vacuum force and the spring like forces acting on the bellows (11) and the linking means (28) are exactly compensated by the vacuum force and the spring like force acting on the bellows (27) and linking means (28). As a result, the linking means (28) is subjected to a zero resultant force. Therefore the linking means, in particular a common shaft, can be controllably and speedily moved by a rather weak driving force, such as for example that of a linear induction motor or voice call (34, 29) or other appropriate device. This allows the movable electrode (7) of the variable vacuum capacitor to be moved easier and faster and therefore allows improved capacitance adjustments as compared to previous art variable vacuum capacitors.

Various possible mechanical linkages can be envisaged for linking the two bellows (11 and 27), but a straight-through shaft (28), fixed at either end to the respective end portions of the first (11) and second (27) bellows has the advantage that it requires no threaded joint or other moving parts.

Figure 4 shows an arrangement in which the first (2) and second (22) vacuum enclosures share a common pre-vacuum enclosure (21) for reducing the pressure differential across the respective bellows (11, 27). However, it would be possible to use two separate pre-vacuum enclosures to achieve the same result.

With this arrangement, it is therefore particularly advantageous to use a linear drive or any other moving means which do not contain a screw and nut. Furthermore with this embodiment, the force necessary to adjust the vacuum variable capacitor is reduced even more than in the previously discussed embodiments, and even higher speeds can be achieved. A linear motor (34) outside the enclosures as drive means and a voice-coil (29) inside the pre-vacuum enclosure (21) as driven means, such as a linear induction or voice-coil type motor, can for example be used to adjust the vacuum variable capacitor of Fig. 4. Furthermore, because the nett vacuum and spring forces on the bellows are effectively reduced to zero, the capacitance adjustment speed does not depend on the pressure in the pre-vacuum enclosure (21). The pressure in the pre-vacuum enclosure (21) could thus be any value, including atmospheric pressure, or a higher-than-atmospheric pressure. Indeed, the vacuum variable capacitor of the third embodiment may dispense with the pre-vacuum enclosure (21) altogether. The pressure in the second vacuum enclosure (21) can be the same as in the first vacuum enclosure (2) and/or the third vacuum enclosure (22). The vacuum/spring forces transmitted by the bellows (11, 27) to the mechanical linkage (28) would still be cancelled out.

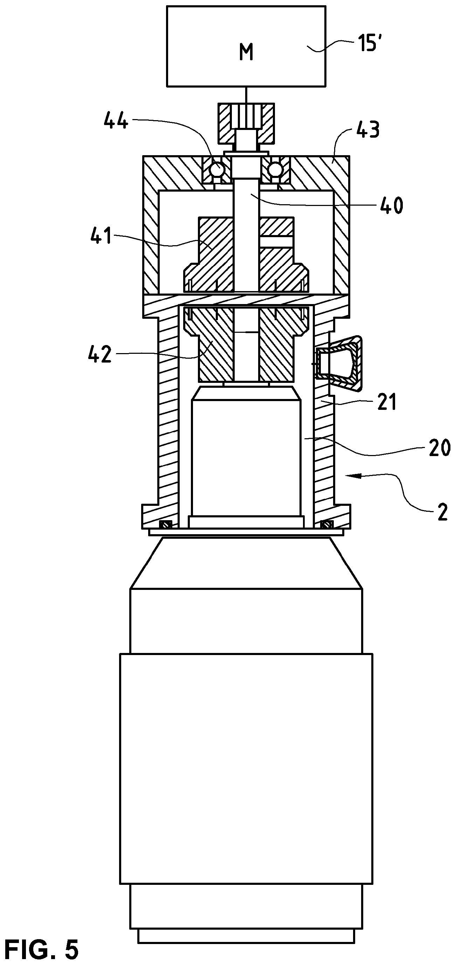

Figure 5 shows a further example of a vacuum variable capacitor according to a fourth embodiment of the present invention. The general set up of the electrodes (6) and (7), the bellows (11), the lead screw (9) and the nut (14) of the capacitor is realized as shown in Figure 2. In Figure 5 the drive means (40) is housed in an enclosure (43) and supported by bearings (44). The magnetic plates (41) and (42) are realised as magnetic blocks in the enclsoures (43) and (21) respectively. The magnets are chosen strong enough to guarantee a perfect orientational coupling of the blocks and the respective parts they are attached to in their respective enclosures (43) and (21). Any "slipping" of the two rotationally coupled systems should be avoided during movement and more critically during acceleration and deceleration.

The arrangement of the motor (15') outside the vacuum enclosures of the vacuum variable capacitor allows a simple design of the capacitor with several vacuum enclosures and facilitates maintenance of the capacitor. However, while some motors are known to work in outer space and are therefore vacuum compatible, it is not feasible to integrate directly an electric motor into the primary vacuum enclosure (2) containing the electrodes. The reason is that even such motors outgas and degrade the vacuum required for dielectric purposes: vacuum pressures better (lower) than $10^{-3}$ mbar, preferably lower than approximately $10^{-4}$, are necessary to be maintained, but those were found to be incompatible with long term outgassing rates of motor parts A worsening of the vacuum quality (i.e. an increase of pressure for example due to outgassing phenomena of motor parts) in the primary enclosure (2) beyond a threshold value (given by the well-known "Paschen law") will result in the failure of the vacuum capacitor by voltage breakdown.

## Claims

1. A vacuum variable capacitor (1) adjustable between a minimum capacitance value and a maximum capacitance value, the vacuum variable capacitor (1) comprising:

   a first vacuum enclosure (2) containing capacitor electrodes (6, 7) separated by a vacuum dielectric (12), the wall of the first vacuum enclosure (2) comprising a first deformable region (11), hereafter referred to as first bellows, for transferring mechanical movement between a drive means (34; 40) and a mobile one (7) of the capacitor electrodes (6, 7) inside the first vacuum enclosure (2),
   a second enclosure (21), referred to hereafter as the pre-vacuum enclosure, containing a gas (20) at a predetermined pressure, wherein the first bellows (11) separates the gas (20) in the pre-vacuum enclosure (21) from the vacuum dielectric (12) in the first vacuum enclosure (2), and
   **characterized in that** the drive means (34; 40) is disposed outside the first and the second enclosure (2; 21) of the vacuum variable capacitor (1) and comprises a contact free transfer of movement to a driven means (9, 42; 28, 29) inside an enclosure (2; 21) of the vacuum variable capacitor (1).

2. A vacuum variable capacitor (1) according to claim 1, wherein the drive means (34; 40) is coupled to a driven means (28; 42, 9) by a magnetic coupling.

3. A vacuum variable capacitor (1) according to claim 2, wherein the magnetic coupling comprises a shielding to be shielded from electromagnetic fields.

4. A vacuum variable capacitor (1) according to one of the preceding claims, wherein the drive means (40) comprises a stepper motor (15').

5. A vacuum variable capacitor (1) according to one of the preceding claims, wherein the predetermined pressure of the second enclosure (21) is lower than atmospheric pressure.

6. A vacuum variable capacitor (1) according to one of the preceding claims, comprising an insulation element (8) for electrically insulating the drive means (34; 40) and/or the motor (15') from a variable mounting plate (4) of the first vacuum enclosure (2).

7. A vacuum variable capacitor (1) according to one of the preceding claims 1 to 5, wherein the first vacuum enclosure (2) and the second vacuum enclosure (21) are seperatly arranged such that the drive means (34; 40) is insulated from a high voltages present at electrodes (7, 6; 24, 25) of the vacuum capacitor (1).

8. A vacuum variable capacitor (1) according to one of the preceding claims, comprising a third enclosure (22) comprising a second deformable wall region (27), referred to hereafter as second bellows, separating third enclosure (22) from the pre-vacuum enclosure (21), wherein the first bellows (11) is mechanically linked to the second bellows (27).

9. A vacuum variable capacitor (1) according to claim 8, wherein the second bellows (27) is substantially identical to the first bellows (11).

10. A vacuum variable capacitor (1) according to one of the preceding claims, wherein the drive means (34) comprise a voice coil or other linear drive.

11. A vacuum variable capacitor (1) according to one of claims 1 to 9, wherein the driven means comprise a lead screw (9) and a nut (14), and wherein the screw (9) and/or the nut (14) comprise a ceramic material.

12. A vacuum variable capacitor (1) according to one of the preceding claims, wherein the minimum adjustment time between the minimum capacitance value and the maximum capacitance value is less than 0.1s.

13. A vacuum variable capacitor (1) according to one of the preceding claims, wherein the maximum capacitance value is at least 10 times greater than the minimum capacitance value.


**Patentansprüche**

1. Variabler Vakuumkondensator (1), welcher zwischen einem minimalen Kapazitätswert und einem maximalen Kapazitätswert einstellbar ist, wobei der variable Vakuumkondensator (1) umfasst:

    ein erstes Vakuumgehäuse (2), welches Kondensatorelektroden (6, 7) enthält, die durch ein Vakummdielektrikum (12) getrennt sind, wobei die Wand des ersten Vakuumgehäuses (2) einen ersten deformierbaren Bereich (11) aufweist, nachfolgend als erster Balg bezeichnet, um mechanische Bewegung zwischen einem Antriebsmittel (34; 40) und einer beweglichen Kondensatorelektrode (7) der Kondensatorelektroden (6, 7) innerhalb des ersten Vakuumgehäuses (2) zu übertragen,
    ein zweites Vakuumgehäuse (21), nachfolgend als Pre-Vakuumgehäuse bezeichnet, enthaltend ein Gas (20) bei einem vorbestimmten Druck, wobei der erste Balg (11) das Gas (20) in dem Pre-Vakuumgehäuse (21) von dem Vakuumdielektrikum (12) in dem ersten Vakuumgehäuse (2) trennt, und
**dadurch gekennzeichnet, dass**
das Antriebsmittel (34; 40) ausserhalb des ersten und des zweiten Gehäuses (2; 21) des variablen Vakuumkondensators (1) angeordnet ist und eine kontaktlose Übertragung von Bewegung an ein Antriebsmittel (9, 42; 28, 29) innerhalb eines Gehäuses (2; 21) des variablen Vakuumkondensators (1) umfasst.

2. Variabler Vakuumkondensator (1) nach Anspruch 1, wobei das Antriebsmittel (34; 40) mit einem Antriebsmittel (28; 4, 9) mittels einer Magnetkupplung gekoppelt ist.

3. Variabler Vakuumkondensator (1) nach Anspruch 2, wobei die Magnetkupplung eine Abschirmung umfasst, um von elektromagnetischen Feldern abgeschirmt zu sein.

4. Variabler Vakuumkondensator (1) nach einem der vorhergehenden Ansprüche, wobei das Antriebsmittel (40) einen Schrittmotor (15') umfasst.

5. Variabler Vakuumkondensator (1) nach einem der vorhergehenden Ansprüche, wobei der vorbestimmte Druck des zweiten Gehäuses (21) niedriger als Umgebungsluftdruck ist.

6. Variabler Vakuumkondensator (1) nach einem der vorhergehenden Ansprüche, wobei ein Isolationselement (8) umfasst ist, um das Antriebsmittel (34; 40) und/oder den Motor (15') von einer variablen Befestigungsplatte (4) des ersten Vakuumgehäuses (2) elektrisch zu isolieren.

7. Variabler Vakuumkondensator (1) nach einem der vorhergehenden Ansprüche 1 bis 5, wobei das erste Vakuumgehäuse (2) und das zweite Vakuumgehäuse (21) getrennt angeordnet sind, so dass das Antriebsmittel (34; 40) von einer hohen Spannung isoliert ist, welche an den Elektroden (7, 6; 24, 25) des Vakuumkondensators (1) anliegt.

8. Variabler Vakuumkondensator (1) nach einem der vorhergehenden Ansprüche, umfassend ein drittes Gehäuse (22), welches einen zweiten deformierbaren Wandbereich (27) umfasst, der nachfolgend als zweiter Balg bezeichnet ist, welcher das dritte Gehäuse (22) von dem Pre-Vakuumgehäuse (21) trennt, wobei der erste Balg (11) mechanisch mit dem zweiten Balg (27) verbunden ist.

9. Variabler Vakuumkondensator (1) nach Anspruch 8, wobei der zweite Balg (27) im Wesentlichen identisch zu dem ersten Balg (11) ist.

**10.** Variabler Vakuumkondensator (1) nach einem der vorhergehenden Ansprüche, wobei das Antriebsmittel (34) eine Schwingspule oder einen Linearantrieb umfasst.

**11.** Variabler Vakuumkondensator (1) nach einem der Ansprüche 1 bis 9, wobei das Antriebsmittel eine Leitspindel (9) und eine Mutter (14) umfasst, und wobei die Spindel (9) und/oder die Mutter (14) ein Keramikmaterial aufweist.

**12.** Variabler Vakuumkondensator (1) nach einem der vorhergehenden Ansprüche, wobei die minimale Einstellzeit zwischen dem minimalen Kapazitätswert und dem maximalen Kapazitätswert weniger als 0.1 s ist.

**13.** Variabler Vakuumkondensator (1) nach einem der vorhergehenden Ansprüche, wobei der maximale Kapazitätswert mindestens 10-mal grösser als der minimale Kapazitätswert ist.


**Revendications**

**1.** Condensateur variable à vide (1), réglable entre une valeur de capacitance minimale et une valeur de capacitance maximale, le condensateur variable à vide (1) comprenant :

une première enceinte sous vide (2) contenant des électrodes de condensateur (6, 7) séparées par un diélectrique ayant la permittivité du vide (12), la paroi de la première enceinte sous vide (2) comprenant une première zone déformable, à laquelle on se réfère ci-après comme un premier soufflet (11), pour transférer un mouvement mécanique entre un moyen d'entraînement (34, 40) et une électrode mobile (7) parmi les électrodes de condensateur (6, 7) à l'intérieur de la première enceinte sous vide (2), une deuxième enceinte (21), à laquelle on se réfère ci-après comme enceinte à pré-vide, contenant un gaz (20) à une pression prédéterminée, le premier soufflet (11) séparant le gaz (20) dans l'enceinte à pré-vide (21) du diélectrique ayant la permittivité du vide (12) dans la première enceinte sous vide (2), et **caractérisé en ce que** le moyen d'entraînement (34, 40) est disposé à l'extérieur de la première et de la deuxième enceinte (2, 21) du condensateur variable à vide (1) et comprend un transfert sans contact du mouvement vers un moyen entraîné (9, 42, 28, 29) à l'intérieur d'une enceinte (2, 21) du condensateur variable à vide (1).

**2.** Condensateur variable à vide (1) selon la revendication 1, dans lequel le moyen d'entraînement (34, 40) est couplé à un moyen entraîné (28, 42, 9) via un couplage magnétique.

**3.** Condensateur variable à vide (1) selon la revendication 2, dans lequel le couplage magnétique comprend un blindage de protection contre des champs électromagnétiques.

**4.** Condensateur variable à vide (1) selon l'une des revendications précédentes, dans lequel le moyen d'entraînement (40) comprend un moteur pas-à-pas (15').

**5.** Condensateur variable à vide (1) selon l'une des revendications précédentes, dans lequel la pression prédéterminée de la deuxième enceinte (21) est plus basse que la pression atmosphérique.

**6.** Condensateur variable à vide (1) selon l'une des revendications précédentes, comprenant un élément d'isolation (8) pour isoler électriquement le moyen d'entraînement (34, 40) et/ou le moteur (15') d'une plaque de montage variable (4) de la première enceinte sous vide (2).

**7.** Condensateur variable à vide (1) selon l'une des revendications 1 à 5 précédentes, dans lequel la première enceinte sous vide (2) et la deuxième enceinte sous vide (21) sont agencées séparément de telle sorte que le moyen d'entraînement (34, 40) est isolé des hauts voltages présents au niveau des électrodes (7, 6, 24, 25) du condensateur à vide (1).

**8.** Condensateur variable à vide (1) selon l'une des revendications précédentes, comprenant une troisième enceinte (22) comprenant une deuxième zone de paroi déformable, à laquelle on se réfère ci-après comme deuxième soufflet (27), séparant la troisième enceinte (22) de l'enceinte à pré-vide (21), et dans lequel le premier soufflet (11) est relié mécaniquement au deuxième soufflet (27).

**9.** Condensateur variable à vide (1) selon la revendication 8, dans lequel le deuxième soufflet (27) est substantiellement identique au premier soufflet (11).

**10.** Condensateur variable à vide (1) selon l'une des revendications précédentes, dans lequel le moyen d'entraînement (34) comprend une bobine acoustique ou un autre actionneur linéaire.

**11.** Condensateur variable à vide (1) selon l'une des revendications 1 à 9, dans lequel le moyen d'entraînement comprend une vis-mère (9) et un écrou (14), et dans lequel la vis (9) et/ou l'écrou (14) comprennent un matériau en céramique.

**12.** Condensateur variable à vide (1) selon l'une des revendications précédentes, dans lequel le temps de réglage minimum entre la valeur de capacitance minimale et la valeur de capacitance maximale est de moins que 0.1 s.

**13.** Condensateur variable à vide (1) selon l'une des revendications précédentes, dans lequel la valeur de capacitance maximale est au moins 10 fois plus grande que la valeur de capacitance minimale.

**FIG. 1**

**FIG. 2**

**FIG. 3**

**FIG. 4**

**FIG. 5**

**EP 3 005 386 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1208393 A
- US 2010202094 A1